# EUROPEAN PATENT APPLICATION

(11) **EP 4 838 811 A1**
(43) Date of publication of application: **11.11.2026**
(21) Application number: 25175169.9
(22) Date of filing: 08.05.2025
(51) Int. Cl.: H04L 1/00, H04B 7/06

(54) **COMMUNICATION APPARATUS AND BASE STATION AND METHODS FOR REPORTING CSI EVENTS USING EVENT TRIGGER**

(71) Applicant: Panasonic Intellectual Property Corporation of America, Torrance, CA 90504 (US)
(72) Inventor: ZEINEDDINE, Khalid, 63225 Langen (DE); SUZUKI, Hidetoshi, Osaka, 571-8501 (JP)
(74) Representative: Grünecker Patent- und Rechtsanwälte PartG mbB

(57) **Abstract**

Provided are a communication apparatus, a base station, and communication methods. The communication apparatus comprises a transceiver, which receives a configuration of at least one reference signal, RS, set, each of the at least one RS set comprising a plurality of RSs for event monitoring, and performs event monitoring by measuring the channel state based on the plurality of RSs of the at least one RS set; and circuitry, which determines, based on the measured channel state, whether an event trigger is invoked by a change detected in the measured channel state, wherein the circuitry, in operation, determines not more than one event trigger to be invoked per RS set within a monitoring time window. The transceiver, transmits an event trigger notification on a next available event notification occasion associated with the monitoring time window if the event trigger has not expired at the timing of the event notification occasion.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

One non-limiting and exemplary embodiment facilitates computation-efficient and well-timed triggering and reporting of channel state events.

In an embodiment, the techniques disclosed here feature a communication apparatus comprising a transceiver, which receives a configuration of at least one reference signal, RS, set, each of the at least one RS set comprising a plurality of RSs for event monitoring, and performs event monitoring by measuring the channel state based on the plurality of RSs of the at least one RS set; and circuitry, which determines, based on the measured channel state, whether an event trigger is invoked by a change detected in the measured channel state, wherein the circuitry, in operation, determines not more than one event trigger to be invoked per RS set within a monitoring time window. The transceiver, transmits an event trigger notification on a next available event notification occasion associated with the monitoring time window if the event trigger has not expired at the timing of the event notification occasion.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

- **Fig. 1**: shows an exemplary architecture for a 3GPP NR system.
- **Fig. 2**: illustrates a simplified and exemplary implementation of a set of synchronization signal blocks distributed in a half-frame;
- **Fig. 3**: illustrates several beams and the corresponding SSB index, SSB1-SSB8, and how the beams are transmitted by the gNB in a beam-sweeping manner;
- **Fig. 4**: illustrates a signaling diagram for CSI measurement and reporting;
- **Fig. 5**: illustrates a DCI containing a CSI request field that indicates a group of CSI report configurations;
- **Fig. 6**: illustrates a DCI containing a CSI request field that indicates a group of CSI report configurations, wherein the indicated group includes CSI report configurations pertaining to event-triggered CSI information and a CSI report configuration pertaining to NW-requested CSI information;
- **Fig. 7**: is a block diagram of a communication system in accordance with exemplary embodiments of the present disclosure;
- **Fig. 8**: is a block diagram of event triggering circuitry of a communication apparatus in accordance with exemplary embodiments of the present disclosure;
- **Fig. 9**: is a block diagram of circuitry of a base station in accordance with exemplary embodiments of the present disclosure;
- **Fig. 10**: illustrates the steps of a method for a communication apparatus according to an embodiment;
- **Fig. 11**: illustrates the steps of a method for a base station according to an embodiment;
- **Fig. 12**: illustrates the steps of a method for a communication apparatus according to an embodiment;
- **Fig. 13**: illustrates the steps of a method for a base station according to an embodiment;
- **Fig. 14**: shows exemplary functional split options in 5G O-RAN.

### DETAILED DESCRIPTION

### 5G NR system architecture and protocol stacks

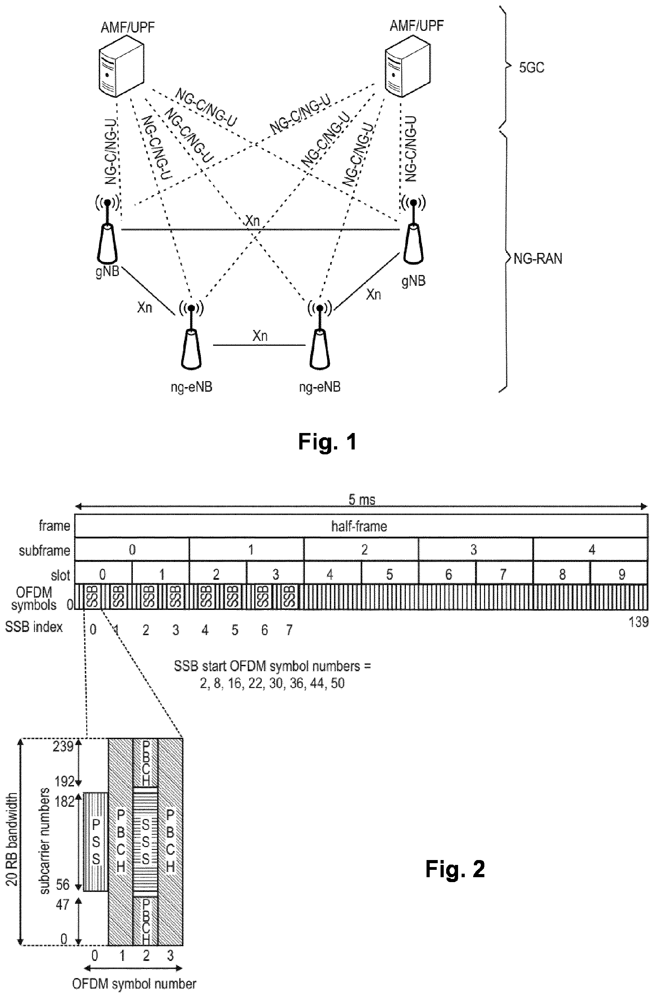

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (e.g. PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.6.0 sections 7.4.2.2 and 7.4.2.3 (see also 3GPP TS 38.211 v18.1.0 sections 7.4.2.2 and 7.4.2.3), including the respective sequence generation and mapping to physical resources.

The time-frequency structure of an SS/PBCH block, carrying the SSS is described in the 3GPP TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

A simplified and exemplary illustration of the SSB according to the above definitions is illustrated in Fig. 2, which shows at the bottom part the PSS, SSS, and PBCH in the time and frequency domain.

The SSB set illustrated in Fig. 2 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

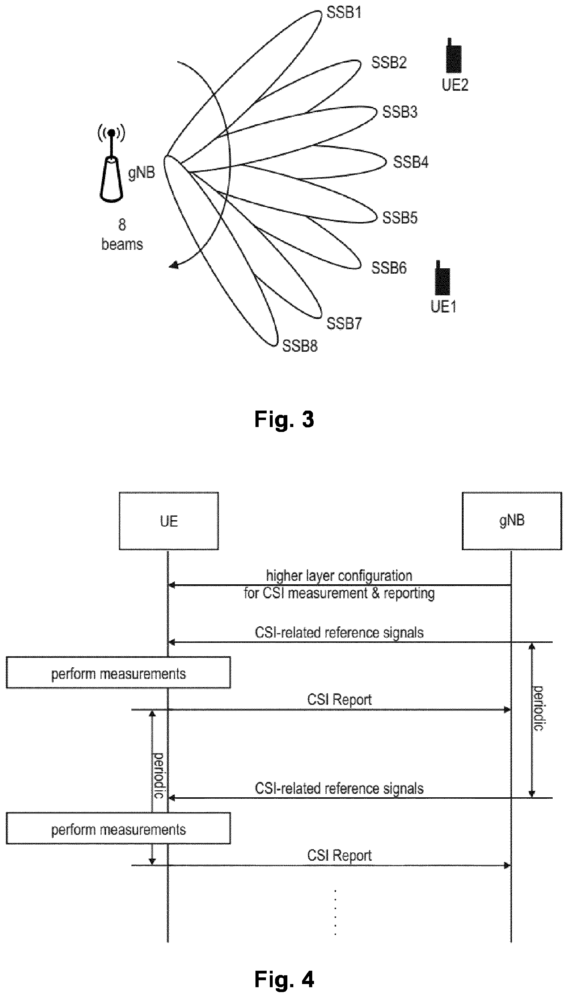

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 3****.** Similar to the exemplary assumption of Fig. 2, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Reference Signals

Several different types of reference signals (RS) are used for 5G NR (see 3GPP TS 38.211 v18.1.0 section 7.4.1). At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see 3GPP TS 38.214 v18.1.0 e.g. section 8.4.1)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. 3GPP TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using e.g. the IE *CSI-RS-ResourceMapping* that configures the resource element mapping of a CSI-RS resource in the time- and frequency domain.

### Uplink Control Information in 5G NR and Scheduling Requests

Whereas Downlink Control Information (DCI) is carried by the PDCCH, Uplink Control Information (UCI) can be transmitted on the PUCCH or the PUSCH depending on the situation. Uplink control information can be e.g.
- the channel state information (CSI), related to the downlink channel conditions, used to assist downlink scheduling, including multi-antenna and beamforming schemes,
- the ACK/NACK information (Hybrid-ARQ acknowledgments for received DL-SCH transport blocks), and
- scheduling requests, indicating that a device needs uplink resources for UL-SCH transmission.

Not all of these need be carried by a single transmission. For instance, the CSI may be carried alone, or the ACK/NACK may be carried alone, or the SR may be carried alone, or the CSI and ACK/NACK are transmitted together in a PUCCH/PUSCH, etc.

The physical uplink control channel (PUCCH) is the basis for transmission of uplink control. However, NR supports UCI on PUSCH as the basic way of handling simultaneous transmission of data and control. If the device is transmitting on the PUSCH, the UCI is multiplexed with data on the granted resources instead of being transmitted on the PUCCH.

A short duration PUCCH can be transmitted in the last one or two symbols of a slot and thus supports very fast feedback of hybrid-ARQ acknowledgments in order to realize so-called selfcontained slots where the delay from the end of the data transmission to the reception of the acknowledgment from the device is in the order of an OFDM symbol, corresponding to a few tens of microseconds depending on the numerology used. This can be compared to almost 3 ms in LTE and is yet another example on how the focus on low latency has impacted the NR design. For situations when the duration of the short PUCCH is too short to provide sufficient coverage, there are also possibilities for longer PUCCH durations.

There are a plurality of different PUCCH formats that can be used for transmitting the UCI, depending on the amount of information and the duration of the PUCCH transmission.

There are five PUCCH formats, 0-4. Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats because they occupy from 4 to 14 OFDM symbols. The reason for having a longer time duration than the previous two formats is coverage. If a duration of one or two OFDM symbols does not provide sufficient received energy for a reliable reception, a longer time duration is necessary and one of the long PUCCH formats can be used.

Which PUCCH format is used can be e.g. determined based on how many bits of UCI should be transmitted and how many symbols (duration of the PUCCH) can be used (see e.g. 3GPP TS 38.211 e.g. v18.1.0, section 6.3.2).

The UCI can be transmitted on the PUCCH flexibly in the time and frequency domain using specifically assigned radio resources, e.g. PUCCH resource sets. A UE can be configured e.g. with up to four sets of PUCCH resources, wherein a PUCCH resource set is associated with a PUCCH resource set index. In particular, a PUCCH resource set contains at least four PUCCH resource configurations, where each resource configuration contains the PUCCH format to use and all the transmission parameters necessary for that format. The configuration of such resources can be done by different information elements, e.g. of the RRC protocol layer, such as the PUCCH-Config information element (see e.g. 3GPP TS 38.331 e.g. v18.0.0, such as section 6.3.2).

As mentioned, up to four PUCCH resource sets can be configured for a UE, each of them corresponding to a certain range of UCI feedback to transmit. For instance, PUCCH resource set 0 can handle UCI payloads up to two bits and hence only contains PUCCH formats 0 and 1, while the remaining PUCCH resource sets may contain any PUCCH format except format 0 and 1. One example configuration according to 3GPP is provided as follows as part of the PUCCH-Config IE (see e.g. 3GPP TS 38.331 v18.0.0)

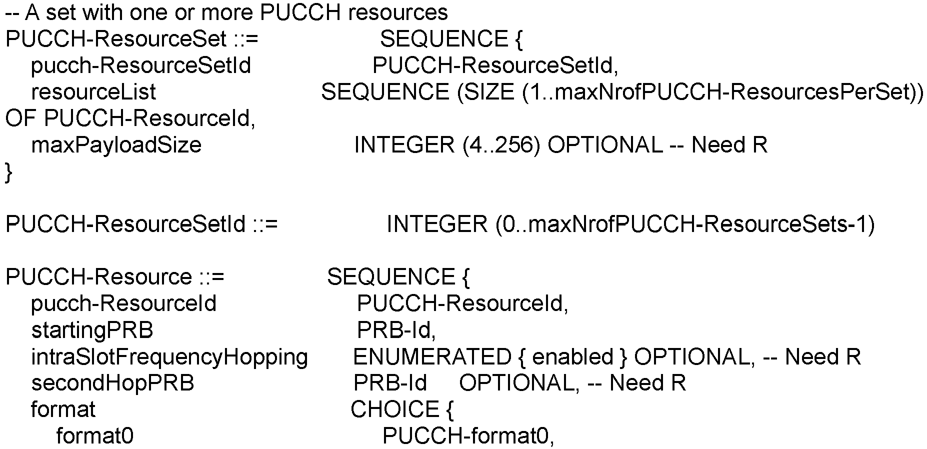

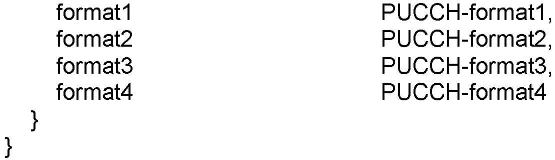

The current reporting of the UCI in the PUCCH is defined in 3GPP TS 38.213 e.g. v18.1.0, section 9.2.

A PUCCH resource may include one or more of the following parameters.
- A PUCCH resource index
- An index of the first PRB (Physical Resource Block) prior to frequency hopping and for no frequency hopping
- An index of the first PRB after frequency hopping
- An indication for intra-slot frequency hopping
- A configuration for a PUCCH format

The PUCCH resources are assigned by the gNB such that they are different for each UE. UEs use the preconfigured PUCCH resources without any coordination of the gNB. By assigning different PUCCH resources to the UE, it is ensured that UEs may use these resources at the same time without causing collisions or interference with one another.

The transmission of a scheduling request using the PUCCH is defined in 3GPP TS 38.213 e.g. section 9.2.4. A UE is configured with specific parameters for determining the scheduling-request radio resources to be used for transmitting a scheduling request (SR). For instance, periodicity and offset are defined for the SR transmission and are used to determine the slot and/or the frame number for the SR transmission occasion based on the configured PUCCH resource set(s).

In said respect, the configuration of such SR resources can be done by different information elements, e.g. of the RRC protocol layer, such as the *SchedulingRequestConfig* information element (which is configured inside the *MAC-CellGroupConfig* IE) and the *SchedulingRequestResourceConfig* information element (see e.g. 3GPP TS 38.331 v16.7.0, such as section 6.3.2). The *MAC-CellGroupConfig* IE configures the set of scheduling requests, used by the UE (ID, prohibit timer, etc.) and tied by the ID number to the SchedulingRequestResourceConfig which determines the PUCCH resources used alongside the periodicity among other parameters. Finally, in the *LogicalChannelConfig* IE, the logical channel is tied to a scheduling request ID (for details of the above IEs, see 3GPP TS 38.331 v18.0.0).

In brief, the scheduling request is basically a flag (1-bit) used by the user equipment to request uplink resources from the uplink scheduler at the base station. Since the device requesting the resources, by definition, has no PUSCH resource available, the scheduling request is transmitted on the PUCCH using the preconfigured and periodically reoccurring PUCCH resources dedicated to the UE. The serving base station can then assign radio resources to the user equipment.

Each SR configuration consists of a set of periodically reoccurring PUCCH resources across different BWPs and cells (i.e. each SR configuration consists of a set of PUCCH resources tied to a numerology, BWP, and cell). With a dedicated scheduling-request mechanism, there is no need to provide the identity of the device requesting to be scheduled because the identity is implicitly known from the resources upon which the request is transmitted.

Each SR also corresponds to one or more logical channels which means that UE is able to make the query for UL resources for a selected logical channel. For a logical channel at most one PUCCH resource per BWP is configured. This provides the gNB not only with information that there are data awaiting transmission in the device, but also what type of data are awaiting transmission. This is useful information for the gNB given the wider range of traffic types the NR is designed to handle. For example, the gNB may want to schedule a device for transmission of latency-critical information but not for non-latency-critical information.

Each device can be assigned dedicated PUCCH scheduling request resources with a periodicity ranging from every second OFDM symbol to support very latency-critical services up to every 80 ms for low overhead. Only one scheduling request can be transmitted at a given time, that is, in the case of multiple logical channels having data to transmit a reasonable behavior is to trigger the scheduling request corresponding to the highest-priority logical channel.

UE may send up to a maximum number of SR requests and the maximum value is configured by network. A scheduling request is repeated in subsequent resources, up to a configurable limit, until a grant is received from the gNB. It is also possible to configure a prohibit timer, controlling how often a scheduling request can be transmitted which prevents UE from sending multiple SRs consecutively. An SR cannot be sent during a measurement gap or when UL-SCH is scheduled.

Finally, when the UE is in RRC_CONNECTED state and UL data arrives, but the UE is not configured with PUCCH resource for scheduling requests, the UE uses the CBRA, contention based random access, procedure based on the SS/PBCH blocks. Moreover, when the UE sends a scheduling request in response to UL data arrival but fails to receive an UL grant from the network, the UE uses the CBRA procedure based on the SS/PBCH blocks. This is because an SR is considered as pending until resources are granted by the gNB and is repeated on the PUCCH as long as it is pending. When the number of SRs sent on the PUCCH reaches a maximum configured by the higher layer, SR failure is declared, and a random access procedure is triggered.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into the following three main procedures:
- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). In one example, for determining the UE Tx beam, the UE is configured by the gNB to transmit SRSs (Sounding Reference Signals) in different directions to the gNB, and in turn the gNB determines and indicates to the UE the best/preferred UL beam using an SRI (SRS Resource Indicator).

Beam management procedure(s) can take place during the RACH (Random Access Channel) procedure, when the gNB sweeps beams by using different DL beams for each SSB, and the UE informs the gNB about the best/preferred Rx beam by using a specific PRACH resource mapped to the selected DL beam. The beam management procedure can e.g. be part or use the CSI framework. The CSI reporting can be configured by the network to occur periodically (e.g. RRC-configured), semi-persistently (e.g. triggered by MAC-CE and/or DCI) or aperiodically (e.g. triggered by DCI). For beam management, when part of the CSI framework, a UE may be configured using an information element, IE, *CSI-ReportConfig,* with the higher-layer parameter reportQuantity set to one or more of "cri-RSRP", "cri-SINR", "ssb-Index-RSRP", "ssb-Index-SINR", "cri-RSRP-Index", "ssb-Index-RSRP- Index", "cri-SINR-Index", "ssb-Index-SINR- Index".

### Initial beam establishment

Initial beam establishment includes the procedures and functions by which a beam pair is initially established in the downlink (DL) and uplink transmission (UL) directions, for example, when a connection is established. In the current 5G NR standard, this can be done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS of the PBCH.

A single SS block spans four OFDM symbols in time and 240 subcarriers in frequency (20 resource blocks) (see Fig. 2). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then can report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring a received signal power. In idle mode, beam measurement can be based on the synchronization signals, and in connected mode, it can be based on the channel state information reference signal, CSI-RS, in DL and on the sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and the UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

### Beam failure recovery

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:
- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

### Radio Link Failure

Under normal operating conditions, a 5G NR UE maintains its connection towards a primary serving cell and completes a handover to change the primary serving cell when necessary. If a handover procedure fails or if a handover procedure is not initiated when required, a UE can experience Radio Link Failure. Possible reasons for Radio Link Failure include congestion at the target cell, a change in radio conditions, a missing neighbor relationship, a triggering threshold that initiates the handover procedure too late, or an inability to complete inter-system handover (e.g. from 5G to LTE) when 5G coverage becomes weak.

In an exemplary procedure for detecting Radio Link Failure, the PHY layer generates *Out-of-Sync* and *In-Sync* indications. In particular, an Out-of-Sync indication is generated when a link quality belonging to all monitored reference signals is worse than a quality threshold Q*ₒᵤₜ*, and an In-Sync indication is generated when the signal quality of at least one monitored reference signal is better than a quality Q*ᵢₙ*.

In-Sync and Out-of-Sync indications are forwarded to the RRC layer, which uses these indications in combination with a timer T310 and counters N310 and N311, which are RRC configured or received in SIB1 (System Information Block 1). In particular, timer T310 is started when N310 consecutive Out-of-Sync indications (without In-Sync indication in between) have been forwarded. For instance, N310 = 3 and N311 = 2. The timer T310 is stopped and reset when N311 consecutive In-Sync indications have been forwarded. Radio Link Failure is detected when timer T310 expires.

If Radio Link Failure is detected at the Primary serving cell, Security Mode procedure and Data Radio Bearers have been setup, the UE initiates RRC connection Re-establishment procedure to recover its connection, which includes initiating Random Access procedures and sending a reestablishment request *RRCConnectionReestablishmentRequest or RRCReestablishmentRequest.* If Radio Link Failure is detected at the Primary serving cell, and Security Mode procedure or at least one Data Radio Bearers has been setup, the UE releases itself to RRC Idle.

Further to the above-described scenario of a measured link quality falling below a quality threshold, other possible conditions for declaring radio link failure include issues with the Random Access procedure (e.g. failure and/or errors in transmission of random access message(s)). Further, radio link failure may be declared when the MAC or RLC layer indicates that a maximum allowable number of retransmissions for an SRB or DRB has been reached.

### Beam measurement and reporting

General operations performed during one or more of said above main procedures may involve one or more of:
- *beam sweeping,* i.e., covering a spatial area with a set of beams transmitted and received according to pre-specified intervals and directions,
- *beam measurement,* i.e., the evaluation of the quality of the received (beam) signal at the gNB or at the UE,
- *beam determination,* i.e., the selection of the suitable beam or beams either at the gNB or at the UE, according to measurements obtained with the beam measurement procedure, and
- *beam reporting,* i.e., a procedure used by the UE to send beam quality and beam decision information to the gNB.

In brief, beam measurement and reporting involve that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework (see below section).

### Channel State Information measurement and reporting framework

The network may configure a UE to perform measurements and to report the measurement results in accordance with the configuration parameters. The measurement and reporting done by a UE can be for instance based on the CSI reporting framework of 5G NR, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resources are defined by the IEs *CSI-IM-Resource,* and *SSB-Index.*
2) List of *CSI-ResourceConfig* IEs
   - Different *CSI-ResourceConfig* in the list can contain one or more different RS resource sets, chosen from List element 1). This may include *NZP*-*CSI*-*RS-Resource Set, CSI-IM-ResourceSet,* and/or *CSI-SSB-ResourceSet,* respectively identified by suitable IDs (see e.g. *NZP-CSI-RS-ResourceSetId, CSI-IM-ResourceSetld,* and/or *CSI-SSB-ResourceSetld)*
3) List of CSI-ReportConfig IEs.
   - Different *CSI-ReportConfig* in the list configure different CSI report instances. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v18.1.0, in section 6.3.

There are at least two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus inflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information),
- PMI (Precoding Matrix Indicator),
- CRI (CSI-RS Resource Indicator),
- SSBRI (SS/PBCH Resource Block Indicator),
- LI (Layer Indicator),
- RI (Rank Indicator),
- L1-RSRP, and/or
- Capability Index.

One or more or a combination of different metrics can be reported by the UE. Generally, the metrics can be grouped into two types:
- L1-RSRP-related quantities (e.g. cri-RSRP and ssb-Index-RSRP, see later IE CSI-*Report Config)*
- CSI-related quantities (e.g. the rest from the IE *CSI-ReportConfig*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-Resource Set.*

In brief, the measurement and reporting, e.g. for the LTM (lower layer triggered mobility),can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible and exemplary sequence of IEs for defining measurement and report according to the CSI framework is presented in the following:
- *CellGroupConfig* IE
   o the *ServingCellConfig* IE of *SpCellConfig* or of *SCellConfig*
      ▪ *CSI-MeasConfig* IE
         - *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
         - *CSI-ReportConfig* IE

**Fig. 4** illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Transmission Configuration Indicator (TCI) states

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters which two signals might share, including for instance one or more of:
- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field *"Transmission Configuration Indication".*
- Step 3: One out of the 8 activated TCI states is then actually used by the UE to receive a target channel/signal. For example, the UE receives a DCI signal, which indicates one of the codepoints in the DCI field *"Transmission Configuration Indication".* The UE applies the indicated codepoint to the target channel(s) or target signal(s).

### Configuration of TCI states (TCI Configuration)

According to one exemplary implementation (see e.g. 3GPP TS 38.214, v18.1.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v18.0.0, section 6.3.2, associates one or two DL reference signals (here SSB and/or CSI-RS) with a corresponding quasi-colocation (QCL) type (for DL or joint DL/UL operation) as follows:

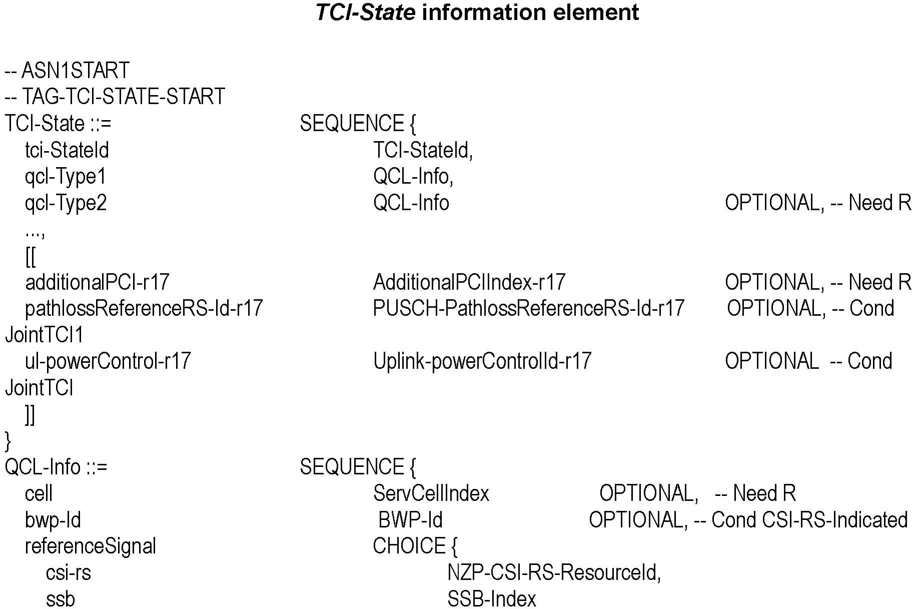

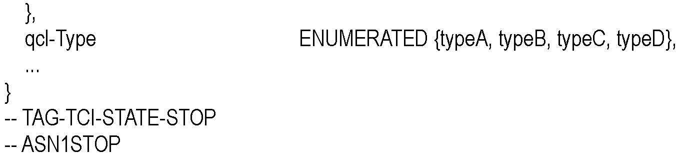

| ***QCL-Info* field descriptions** |
|---|
| ***bwp-Id*** |
| The DL BWP which the RS is located in. If the field is absent, the RS is located in the DL BWP in which the *TCI-State* is applied by the UE. |
| ***cell*** |
| The UE's serving cell in which the *referenceSignal* is configured. If the field is absent, the *referenceSignal* is configured in the serving cell in which the *TCI-State* is applied by the UE. The RS can be located on a serving cell other than the serving cell for which the *TCI-State* is applied by the UE only if the *qcl-Type* is configured as *typeC* or *typeD.* If the *referenceSignal* is set to *csi-rs* and *unifiedTCI-StateType* is configured, either both *cell* and *bwp-Id* are present or both *cell* and *bwp-Id* are absent. See TS 38.214 [19] clause 5.1.5. |
| ***referenceSignal*** |
| Reference signal with which quasi-collocation information is provided as specified in TS 38.214 [19] clause 5.1.5. |
| ***qcl-Type*** |
| QCL type as specified in TS 38.214 [19] clause 5.1.5. |

| ***TCI-State* field descriptions** |
|---|
| ***additionalPCI*** |
| Indicates the physical cell IDs (PCI) of the SSBs when *referenceSignal* is configured as SSB for both QCL-Type1 and QCL-Type2. In case the cell is present, the *additionalPCI* refers to a PCI value configured in the list configured using *additionalPCI-ToAddModList* in the serving cell indicated by the field cell. Otherwise, it refers to a PCI value configured in a list *additionalPCI-ToAddModList* configured in the serving cell where the *TCI-State* is applied by the UE. When this field is present the *cell* for *qcl-Type1* and *qcl-Type2* is configured with same value, if present. |
| ***pathlossReferenceRS-Id*** |
| The ID of the reference signal (e.g. a CSI-RS or an SS block) used for PUSCH, PUCCH and SRS path loss estimation. This field refers to an element in the list configured using *pathlossReferenceRSToAddModList* in the serving cell and UL BWP where the TCI State is applied by the UE. |
| ***qcl-Type1, qcl-Type2*** |
| QCL information for the TCI state as specified in TS 38.214 [19] clause 5.1.5. |
| ***tci-Stateld*** |
| ID number of the TCI state. |
| ***ul-PowerControl*** |
| Configures power control parameters for PUCCH, PUSCH and SRS for this TCI state. The field is present here only if *ul-powerControl* is not configured in any *BWP-Uplink-Dedicated* of this serving cell. This field refers to an element in the list configured using *uplink-PowerControlToAddModList* in the serving cell where the *dl-OrJointTCI-StateToAddModList* is configured. |

| **Conditional Presence** | **Explanation** |
|---|---|
| *CSI-RS-Indicated* | This field is mandatory present if *csi-rs* is included and *unifiedTCI-StateType* is not configured. This field is optionally present, Need R, if *csi-rs* is included and *unifiedTCI-StateType* is configured. Otherwise, it is absent, Need R. |
| *JointTCI* | This field is optionally present, Need R, if this serving cell is configured with *unifiedTCI-StateType* set to *'joint'.* It is absent, Need R, otherwise. |
| *JointTCI1* | This field is mandatory present, if this serving cell is configured with *unifiedTCI-StateType* set to 'joint'. It is absent, Need R, otherwise. |

For the uplink, the information element *TCI-UL-State* is defined in 3GPP TS 38.331, section 6.3.2.

### 3GPP Release 19 MIMO evolution - UE-initiated / event driven beam management

As presented above, the network may configure periodic or semi-persistent beam reporting or trigger aperiodic beam reporting for the purpose of timely acquiring a best/preferred beam for data / control transmissions. This may result in large uplink reporting overhead and/or control signaling overhead in addition to reporting latency. Due to the network-configured nature of the beam reporting, the reporting latency caused by the periodic or semi-persistent beam reporting or triggered aperiodic beam reporting may also result in unnecessarily prolonged periods of communication between UE and network using beams that may have degraded unexpectedly. This might even result in beam failures, which then results in that the UE has to perform a beam failure detection and recovery procedure, rather than performing a simple beam switch in a timely manner. This is inefficient, and further, retransmissions of data might be required in addition to the incurred latency of the recovery procedure.

Given that the UE has better and more-timely knowledge of beam quality changes, beam reporting procedures that are initiated by the UE have the potential to lead to more timely beam reports together with reduced reporting overhead and preventing prolonged degraded communication quality.

Consequently, there is a need to specify enhancements to facilitate UE-initiated / event-driven beam management reporting procedures for reducing overhead and/or reporting latency. Such enhancements may concern both UL (uplink) signaling content(s) (and procedure(s) as required) for UE-initiated/event-driven beam reporting facilitating fast beam switching as well as UL signaling medium/container designed primarily for the purpose of beam reporting, considering the UE-initiated/event-driven nature of the UL transmission. Such efforts for the specification of enhancements may be based on an assumption of unified TCI while leveraging legacy CSI measurement and reporting configuration frameworks as much as possible, possibly targeting FR2 (frequency range 2) and/or sTRP (single-TRP) with intra- and inter-cell beam management.

For such a UE-initiated beam reporting procedure, for the UE to know about the beam-quality change and about when to initiate beam reporting, the UE can perform measurements on DL reference signals. Based on these measurements, the UE can detect whether UE-initiated beam reporting is needed or not.

For example, UE-initiated beam information may be performed upon detection of one or more of the following events:
- Event-1: Quality of the currently used beam for reception/transmission is worse than a certain threshold.
- Event-2: Quality of at least one new beam, such as L1-RSRP, becomes a threshold value better than the current beam.
- Event-3: Quality of a new beam is better than a certain threshold.
- Event-4: Quality of the current beam is worse than a threshold 1, and quality of at least one new beam is better than a threshold 2.
- Event-5: Absolute value of the difference between the quality of the current beam and the quality of at least one new beam is lower than a threshold.
- Event-6: When the current beam is not in the best K>1 beams (out of configured beams for measurement and reporting).
- Event-7: Quality of at least one new beam, such as L1-RSRP, becomes a threshold value better than the RS derived from the activated TCI state with the M-th best quality.
- Event-8: Quality of M>1 new beams, such as L1-RSRP, become a threshold value better than the current beam.
- Event-9: Quality of at least one new beam, such as L1-RSRP, becomes a threshold value better than the configured reference RS (can be SSB or CSI-RS).

It is to be noted that the present disclosure is not limited to above-mentioned exemplary events that may trigger a UE-initiated beam reporting procedure. Only a subset and/or other events may be defined for the UE to initiate the reporting procedure. The events may be specified, for instance, in a standard.

For a UE-initiated beam reporting procedure, the UE needs to find suitable UL channel resources to transmit the beam management report. This can depend on the report size, the tolerated delay, and the intended reliability of the transmission.

Furthermore, the transmission of the UE-initiated beam management report is important for the network because this may be triggered at the UE by a deterioration of the UL/DL transmission channels.

For example, on beam report transmission procedure for UE-initiated/event-driven beam reporting, an event is triggered based on measurements performed on a beam reference signal using configured counters and configured timers to count the event-instance occurrence.

For example, for the UE-initiated/event-driven beam reporting, 3GPP RAN1 provides the following two modes, Modes A and B, of UE-initiated beam management reporting: In both Modes A and B, the UE detects an event and reports the event to the NW using a one-bit UCI transmitted on PUCCH. In Mode A, the UE then receives an UL scheduling grant from the NW using an UL scheduling DCI. The UE transmits the CSI report regarding UE-initiated beam management on PUSCH. In Mode B, the UE transmits the CSI report regarding UE-initiated beam management on configured-grant PUSCH.

It is to be noted that a CSI report initiated by a UE based on the detection of a certain event may be referred to as an event-triggered CSI report or a UE-initiated CSI report. Accordingly, information transmitted in such a report may be denoted event-triggered CSI information or UE-initiated CSI information. Similarly, a CSI report provided by a UE upon reception of a CSI request by a network node may be denoted a network (NW)-initiated CSI report or a NW-requested CSI report.

A CSI report configuration, e.g. an information element *CSI-ReportConfig* in the RRC configuration, can indicate one or more sets of reference signals on which an event is to be detected. Therein, one reference signal set may correspond to one event of a certain type. Furthermore, a CSI report configuration in general can determine a type of CSI report, for example periodic, aperiodic, semi-persistent, UE-initiated (event-triggered). It may also configure the quantities to be provided in the report, which could contain channel quality related parameters or signal strength related quantities (L1-RSRP, L1-SINR, etc). It can also indicate the frequency granularity in the frequency domain (subband, wideband, etc.) and other time measurement restrictions on how the reported quantities are to be measured. There may be many types of reporting quantities such as layer indicator, resource indicator, rank indicator, channel quality indicator, precoder indicator etc. In the case of beam reporting, a CSI resource index and/or the SSB resource index along with their RSRP may be among the reported quantities.

Regarding UE-initiated beam information reporting, it was agreed in 3GPP RAN1 to support reporting for Event-2, N ≥ 1 new beams in the report instance where at least one of N reported beam(s) should satisfy the condition of Event-2. A differential reporting format was agreed as such:

| |
|---|
| CRI or SSBRI #1 |
| CRI or SSBRI #2 |
| ... |
| CRI or SSBRI #N |
| L1-RSRP #1 |
| Differential L1-RSRP #2 |
| ... |
| Differential L1-RSRP #N |
| Differential L1-RSRP for current beam, if report mode that current beam is always reported is enabled by RRC |
| Note: Other contents are not precluded |

For the exemplary format illustrated above, differential L1-RSRP #2~#N/current beam is determined based on a difference between measured L1-RSRP corresponding to the CRI/SSBRI #2~#N/current beam and the measured L1-RSRP corresponding to CRI/SSBRI #1. L1-RSRP#1 is the largest measured RSRP among reported ones, and an absolute L1-RSRP.

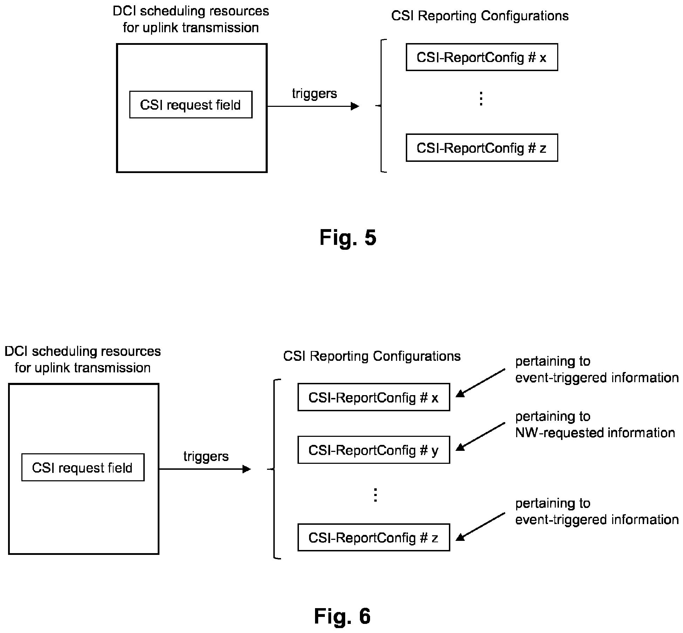

Additional report contents is being discussed like reporting configuration ID, event ID, cell ID, etc. It is to be noted that the present disclosure is not limited to the format and/or information to be transmitted in a CSI report. For example, a different format and/or different report measures may be configured, defined, specified, or the like. Fig. 5 illustrates an example of DCI containing a CSI request field that indicates a group of CSI report configurations.

As mentioned above, a CSI report configuration may define, among other, a reporting frequency, a type of a respective CSI to report, the CSI information to be transmitted, and/or conditions under which the CSI report is to be provided by the UE. That is, in particular, a CSI report configuration may pertain to NW-requested CSI information (e.g. when a reporting frequency is defined) or to event-triggered CSI information (e.g. when conditions under which CSI reporting is to be performed are defined). In other words, a CSI report configuration may indicate event-triggered CSI information or NW-requested CSI information. Such a situation is shown in Fig. 6, which illustrates a DCI containing a CSI request field that indicates a group of CSI report configurations, wherein the indicated group of CSI report configuration includes at CSI report configurations pertaining to event-triggered CSI information (CSI report configurations #x and #z) and a CSI report configuration pertaining to NW-requested CSI information (CSI report configuration #y). It is to be noted that the present disclosure is not limited thereto, and a group of CSI report configurations may include at least one CSI report configuration pertaining to event-triggered CSI information and/or at least one CSI report configuration pertaining to NW-requested CSI information. Such CSI configurations may also be denoted event-triggered CSI report configuration and NW-requested CSI report configuration, respectively, depending on whether respective CSI configuration pertains to event-triggered CSI information or NW-requested CSI information.

An event caused by variations in a state of a downlink (DL) communication channel between a network node and a UE may trigger the UE to compile a corresponding CSI report to be transmitted to the network node. For example, the UE may be configured such that an event that triggers an event-triggered CSI report occurs when the UE detects a deterioration of the current transmission channel, and/or the UE determines that there is a communication channel having a higher communication quality compared to the current communication channel.

To detect the occurrence of such a CSI reporting event, the UE measures a configured group of reference signals denoted as event-monitoring RS set, within a monitoring window. A group of RS sets forming an event-monitoring RS set may be a group of reference signals measured to monitor a particular event, e.g. Event-1, Event-2, Event 7, or any one event out of abovelisted events 1 to 9. For instance, in the case of event 2, an event-monitoring RS set may comprise a plurality of RS each associated with a respective beam. It is further noted that one or more RS sets may be configured per event type. Moreover, as mentioned above, an RS set or RS sets may be configured in a CSI report configuration (e.g. the above-described IE *CSI-ReportConfig*), or a plurality of RS sets may defined in a plurality of CSI report configurations. Subsequently, when the occurrence of a CSI reporting event is detected, the UE triggers a mechanism to notify the NW about the event and send the NW the corresponding CSI report. Such a mechanism may for instance follow one of Mode A or Mode B described above. An event detection mechanism may be based on a counter or a timer. For instance, an event is determined to be detected if a change in the channel state or a deviation from an expected measurement result (e.g. a quality or signal strength of a current beam being lower than a threshold or a quality and/or signal strength of a candidate beam different from the current beam exceeding the quality or signal strength of the current serving beam by a value greater than a threshold). Possible parameters indicating a signal strength or quality include, and are not limited to RSRP and SINR.

### Further Modifications

In view of the above, within a monitoring window for CSI reporting event detection, and among the RS of one event-monitoring RS set, multiple events could be triggered by different reference signals. Thus, the inventors have identified the possibility to define techniques that allow the UE to send only one notification to the NW regarding the occurrence of an event per Event-monitoring RS set.

Further, depending on channel coherence conditions and channel variations as well as delays in reporting the occurrence of an event, an event that has been determined (as well as the corresponding event trigger that has been invoked with the determination) at one time instance within the monitoring window may become obsolete at the time of event notification or reporting. In view of this, the inventors have identified the possibility to define techniques that facilitate for the UE to determine whether the trigger regarding a detected event has expired, so that the UE can stop or refrain from sending an obsolete report to the NW beyond expiry time of the event.

### Embodiments

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The expression "**reception quality**" or "**downlink signal reception quality**" can be broadly understood as referring to a quality of reception at the UE. It thus reflects the quality of reception at the UE side (i.e. downlink), which is determined by measuring suitable downlink reference signals (such as SSB, CSI-RS, DMRS etc.). The thus measured downlink signal reception quality can e.g. be used as a quality measure for the ability of the UE to receive a downlink channel, such as a downlink control channel or downlink data shared channel (PDCCH, PDSCH), e.g. even in case said downlink channel has not (yet) been received. Alternative expressions are e.g. *"downlink channel quality", "downlink quality", "quality* of a *downlink control channel", "quality* of a *downlink data channel",* and the like.

The expressions "**beam**" and "**downlink reference signal**" can be used interchangeably, because the beam is a representation of the spatial receive filter used to receive a particular downlink reference signal. For instance, in the present scenario of an improved beam management reporting procedure, it is assumed that communication between the UE and the gNB is performed via beams (be it UL beam or DL beam). Downlink reference signals can be transmitted via narrow beams (e.g. common narrow beam signals are CSI-RS or DMRS) or transmitted via wider beams (e.g. common wide beam signal is SSB). Another expression in this connection is "**spatial direction**", where a beam (and thus the corresponding downlink reference signal) implies a certain "spatial direction" in which the DL RS is received (from viewpoint of UE) or in which the DL is transmitted (from viewpoint of gNB). Thus, the beam management report might be understood as reporting "downlink reference signals", or as reporting "beams", which respectively imply reporting "spatial directions".

The expression "**UE-initiated CSI reporting procedure**", "**UE-initiated CSI reporting**", or "event-triggered CSI reporting" and similar expressions can be broadly understood as referring to a procedure that is initiated by the UE. For instance, it may involve that, after initiation, the UE transmits a report to the base station.

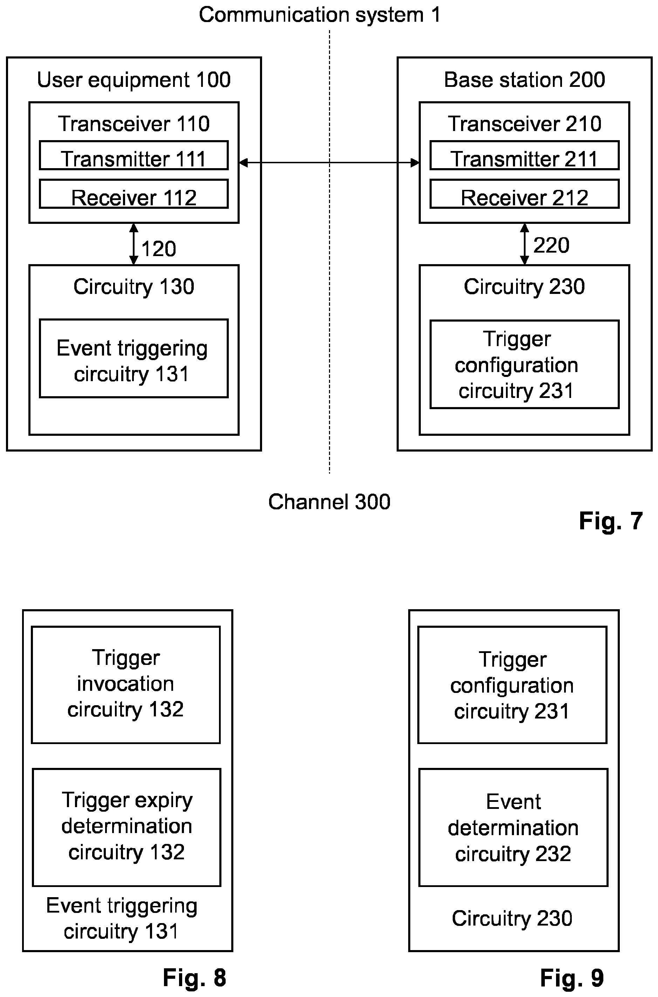

An example of such communication system is illustrated in **Fig. 7****.** The communication system 1 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

**Fig. 7** illustrates a general, simplified and exemplary block diagram of a communication apparatus (which may be exemplarily assumed to be a user equipment (UE) 100 or communication terminal or communication apparatus) and a scheduling device or scheduling node (here exemplarily assumed to be located in a network node or base station 200, e.g. in a LTE eNB (alternatively termed ng-eNB) or the gNB in 5G NR) in the communication system 1. However, in general, a scheduling device may also be a terminal in case of a sidelink connection between two terminals. Moreover, in particular with respect to the use cases of URLLC (ultra reliable low latency communication), eMBB (enhanced mobile broadband), and mMTC (massive machine type communication), the communication apparatus 100 may also be a sensor device, a wearable device, or a connected vehicle, or a controller of an automated machine in an industrial factory.

As illustrated in **Fig. 7****,** the user equipment 100 and the scheduling device or network node 200 (eNB/gNB) may communicate with each other over a (wireless) physical channel 300 respectively using their transceivers 110 (communication apparatus side) and 210 (base station side). Together, the network node 200 and the user equipment 100 may form the communication system 1. The communication system 1 may further include other entities such as those shown in **Fig. 1****,** e.g. a plurality of UEs connected to the base station or a relay node relaying signals to/from the base station from/to one or more UEs, or a plurality of base stations each serving in one or more serving cells.

As illustrated in **Fig. 7****,** the user equipment 100 may comprise a transceiver 110 (e.g. including a transmitter 111 and/or a receiver 112) and circuitry (or processing and/or control circuitry) 130, and the network node 200 may comprise a transceiver 210 (e.g. including a transmitter 211 and/or a receiver 212) and (processing and/or control) circuitry 230.

The term ***"transceiver"*** refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

In the exemplary user equipment 100, the circuitry 130 may control the transceiver 110, which may include the transmitter 111 and the receiver 112, to receive and/or transmit data. This is illustrated by an arrow 120 which represents schematically an interface between the circuitry 130 and the transceiver 110, over which the control is performed.

In the exemplary network node 200, the circuitry 230 may control the transceiver 210 to receive and/or transmit data. This is illustrated by an arrow 220, which represents schematically an interface between the circuitry 230 and the transceiver 210, over which the control is performed. For example, the circuitry 230 may instruct the transceiver 210 to transmit data.

As mentioned above, references to 5G New Radio communication systems are merely exemplary, and the present invention is applicable to other communication systems including present and future standards. Moreover, short expressions "UE" and "gNB" may be used for the reader's convenience, and descriptions of behavior of a "UE" and "gNB" in the description can more generally be applied to a communication apparatus or a base station. Further, the expressions "UE" and "gNB" before "circuitry", "transmitter", "receiver" and "transceiver" may be used for short to distinguish the transceivers and circuitries of a communication apparatus 100 and a network node 200, without implying any limitation to networks such as 3GPPP NR networks.

As shown in **Fig. 7** (left-hand side), provided is a communication apparatus 100 (e.g. e user equipment (UE)). The communication apparatus 100 comprises a transceiver 110 and processing circuitry 130 (or "circuitry").

The transceiver 110, in operation, receives a configuration of at least one reference signal, RS, set, each of the at least one RS set comprising a plurality of RSs for event monitoring, and performs event monitoring by measuring the channel state based on the plurality of RSs of the at least one RS set.

The circuitry 130, in operation, determines, based on the measured channel state, whether an event trigger is invoked by a change detected in the measured channel state.

The transceiver 110, in operation further transmits an event trigger notification on a next available event notification occasion associated with the monitoring time window if the event trigger has not expired at the timing of the event notification occasion.

As can be seen in Fig. 7, the circuitry 130 of the communication apparatus (or "UE circuitry" for short) may comprise event triggering circuitry 131. Exemplary event triggering circuitry 131 of a UE is illustrated in **Fig. 8****,** which may comprise trigger invocation circuitry 132, which, in operation, determines whether one or more RSs of an RS set invoke a trigger, and trigger expiry determination circuitry 132 which, in operation, determines whether the invoked trigger has expired. However, it should be noted that the present disclosure does not require a division of the UE circuitry 130 or its event triggering circuitry 131 into sub-circuitries as shown in Fig. 8, as the circuitry of the communication apparatus may be provided as a single processor or an integrated array of processing circuitry).

As further shown in **Fig. 7** (right-hand side), provided is a base station 200 (e.g. a scheduling node or network node such as a gNB). The base station 200 comprises a transceiver 210 and circuitry 230.

The circuitry 230, in operation, determines a configuration of at least one reference signal, RS, set. Each of the at least one RS set comprises a plurality of RSs for event monitoring. Herein, "event" refers to a detection event of a channel state to be reported, wherein the detecting end reporting is made by a communication apparatus that is an addressee of the configuration. The transceiver 210, in operation, transmits the configuration, and transmits the plurality of RS of the at least one RS set.

The transceiver 210, in operation, further receives an event trigger notification on an event notification occasion. The event indicates that an event trigger has been in invoked within a monitoring time window associated with the event notification occasion and has not expired at the timing of the event notification occasion.

As can be seen in Fig. 7, the circuitry of the base station (or "BS circuitry" for short) may comprise trigger configuration circuitry 231, which, in operation, determines a configuration of an RS set as described above. In addition, as shown in **Fig. 9****,** exemplary BS circuitry 230 may further comprise event determination circuitry 232 which, in operation, determines, based on a received event trigger notification, that an event has been triggered which has not yet expired. Based on a channel state report that may be received further, the event determination circuitry may, in operation, determine which event has been triggered, and which RS or RSs from which RS set has triggered the event. However, as mentioned for the UE circuitry above, the present disclosure does not require a division of BS circuitry 230 into sub-circuitries, which are merely exemplarily illustrated in Fig. 9.

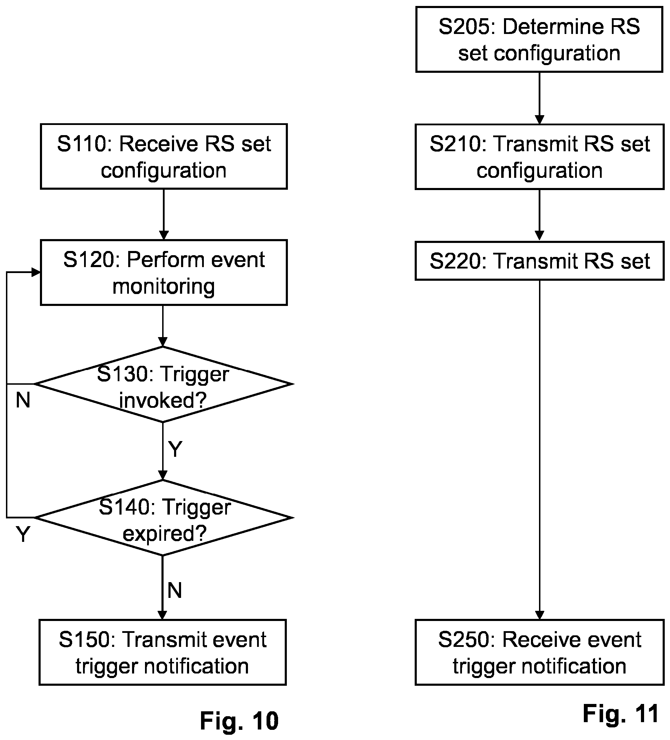

In correspondence with the above-disclosed communication apparatus 100, further provided is a communication method to be performed by a communication apparatus (e.g. for a UE, and exemplarily referred to a "UE method" for short), which is illustrated in **Fig. 10****.** The UE method comprises a step S110 of receiving a configuration of at least one reference signal, RS, set, wherein each configured RS set comprises a plurality of RSs for event monitoring. The method further comprises step S120 of performing event monitoring. The event monitoring is performed by measuring the channel state based on the plurality of RSs of the at least one RS set.

The UE method further comprises a step S130 of determining, based on the measured channel state, whether an event trigger is invoked by detection of a change in the channel state. If no event trigger is invoked within the monitoring time window, the method is terminated, and UE does not transmit the event trigger notification, and the UE may continue monitoring for an event in the next monitoring window.

If an event trigger is invoked, the UE may, in step S150, transmit an event trigger notification on a next available event notification occasion associated with the monitoring time window if the event trigger has not expired at the timing of the event notification occasion, as is determined in step S140. In other words, in step S140, the UE determines whether the event timer is still valid at the timing of the event notification occasion, and transmits the trigger event notification if the event trigger is still valid.

In step S140, the UE determines whether or not the event trigger has expired to decide whether to transmit the event trigger notification. If the event trigger has expired, the method terminates, the UE does not transmit the event trigger notification and the UE may continue monitoring for an event in the next monitoring window.

Also provided, in correspondence with the above-disclosed base station, provided is a communication method to be performed by a base station ("BS method" for short), which is illustrated in **Fig. 11****.** The BS method comprises a step S205 of determining a configuration of at least one reference signal, RS, set. Each of the at least one RS set comprising a plurality of RSs for event monitoring. As mentioned above, an event is a detection event of a channel state to be reported by a communication apparatus that is an addressee of the configuration. In step S210, the base station transmits the configuration. The base station, in step S220, further transmits the plurality of RSs of the at least one RS set. Then, on an event notification occasion, the base station performs step S250 of receiving an event trigger notification. The event trigger notification indicates that an event trigger has been in invoked within a monitoring time window associated with the event notification occasion and has not expired at the timing of the event notification occasion.

In the following, a description of details, examples, and embodiments are provided, which applies to the UE and the base station, and which further applies to the UE as well as the base station.

In particular, according to the present disclosure, the RS set to be monitored by the UE corresponds to the aforementioned event-monitoring reference signal set. The UE is configured with at least one event-monitoring RS set, and may be configured with one or more RS sets per event type. Exemplary RS in the RS set comprise SSB (e.g. for a current serving beam of the UE) and CSI-RS (e.g. for the current beam and other candidate beams), but are not limited thereto, and may include other downlink RS including those mentioned in the present disclosure.

The UE may be further configured or specified with an event detection mechanism based on channel measurements on a reference signal. The event detection mechanism determines how a change detected in the measured channel state invokes an event trigger. In other words, an event detection mechanism defines a configured condition for event detection and for channel state reporting. For instance, an event detection mechanism and condition for reporting may be based on a counter and a timer as described above.

In addition, the UE is configured with periodic or semi-persistent CSI event notification occasions (for example PUCCH resources) for transmitting the event trigger notification. The trigger event notification may be a one-bit notification such as the above-mentioned one-bit UCI. If the event trigger notification is transmitted (and possibly retransmitted) on one or more of the configured event notification occasions, it indicates that an event has been triggered in one or more of the associated configured RS sets.

An event monitoring time window (or "monitoring time window" for short) may be defined with respect to the periodicity of the CSI event notification occasions, e.g. relative to the timings of periodic event notification occasions or by some function of the timings of the event notification occasions. For instance, an event monitoring window may fall between two subsequent event notification occasions and may be associated with the next notification occasion subsequent to the monitoring window. It is noted that the monitoring time window need not necessarily fill the whole interval between two event notification occasions. Accordingly, the monitoring time window need not begin at the end of the previous event notification occasion (e.g. to account for the possibility of events detected shortly after the previous event notification occasion from becoming obsolete due to channel fluctuations), and also need not end at the beginning of the next event notification occasion, e.g. the event notification occasion associated with the monitoring time window need not end directly at the beginning of the next event notification occasion which may be the notification associated with the monitoring time window (e.g. to take into account processing and/or channel latency).

Defining the monitoring time window based on the periodicity of event notification occasions, and thereby aligning the beginning and the end of the monitoring time window with the timing of the event notification occasions, may facilitate notifying event triggers in a timely manner, e.g. before their expiry. However, it is noted that the present disclosure does not require that the monitoring time window is defined (e.g. configured) relative to the event notification occasions. According to the present invention, it is sufficient that, among event monitoring notifications configured for an event monitoring RS set, the trigger event notification is transmitted on a next available notification occasion (and may be retransmitted on subsequent occasions).

When an event trigger is invoked within a monitoring time window, the UE determines whether or not the event trigger has expired. If it has not expired, the UE transmits the trigger event notification to the base station to notify the network regarding an unexpired event trigger on the next available CSI event notification occasion. It is noted that transmitting the event trigger notification may comprise sending and resending. For instance, if an event reporting mechanism follows above described Mode A, the UE may retransmit the event trigger notification for an event trigger that has not expired until the UE receives a scheduling grant for a channel state report (or CSI event report).

Subsequent to the transmission of the event trigger notification, the UE may transmit to the base station a channel state report (e.g. a CSI report) reporting on the event corresponding to the event trigger. The UE may be configured or scheduled with a CSI event reporting occasion (for example dynamic grant or configured grant PUSCH). Accordingly, on such an event reporting occasions the UE may transmit to the base station a CSI event report. For instance, an event reporting occasion for transmitting the channel state report may be scheduled dynamically via physical control channel (e.g. in the case of mode A for UE initiated report transmission) or configured as a configured-grant reporting occasion (such as semi-persistent or periodic occasions, e.g. in Mode B).

While the event trigger notification (e.g. a one-bit indicator) notifies the network that an event has been triggered and is still valid, the event report provides the network with details on the triggered event, such as what type of event (e.g. among above-descried event types 1 to 9), , and/or (if more than one RS set is configured) which RS set comprises the RS that has triggered the event. The report may further indicate which RS within an RS set has triggered the event.

Upon receiving an event trigger notification, the network knows that a triggered event is reported. Accordingly, the network either reserves (already) configured resources for receiving the channel state event report, or transmits to the UE a scheduling grant for the UE to transmit the channel state (or SCI) event report.

An event trigger can be invoked per configured event-monitoring RS set. It is noted that within a monitoring time window and among an RS set, one or more RS may meet the configured condition for event detection and channel state reporting. However, according to some embodiments, in the determination whether an event trigger has been invoked, the UE determines not more than one event trigger to be invoked per RS set within a monitoring time window. Accordingly, the UE does not invoke more than one event trigger at an event notification occasion per event monitoring resource set. In other words, if an event is triggered by any RS among an RS set through RS channel state measurement, the UE invokes only one event trigger per RS set and per monitoring time window.

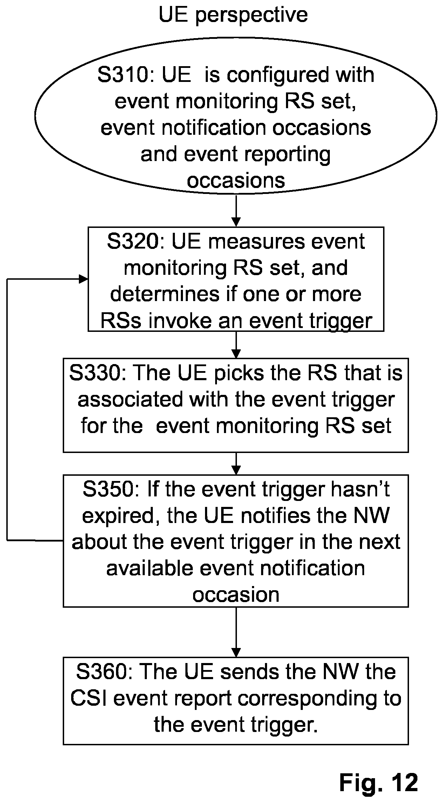

**Fig. 12** illustrates an exemplary embodiment of a UE method according to the present invention that comprises an additional step S360 of transmitting a channel state report to the network.

In Fig. 12, step S310 exemplifies step S110 shown in Fig. 10. As shown and as described above, the UE may, in addition to an event monitoring RS set (or sets), be configured with event monitoring occasions and event reporting occasions.

In step S320, which corresponds to steps S120 and S130 shown in Fig. 10, the UE performs event monitoring by measuring a channel state with respect to the RS of the event monitoring RS set, and thereby performs event monitoring and determining if one or more RSs within one event monitoring RS set meets a condition for invoking an event trigger.

Since more than one RS within an RS set may potentially meet the condition for invoking the event trigger, the method further comprises step S330 (e.g. as a sub-step of step S120) of determining, out of the plurality of RSs per RS set, not more than one RS to invoke the event trigger within a monitoring time window associated with the event notification occasion. The one RS is selected among RS for which the change detected in the measured channel state meets a configured condition for channel state reporting. In other words, the UE picks the RS that is associated with the event trigger for the event monitoring RS set. It is noted based on the determination RS that has invoked the event trigger, the UE may determine a time at which the triggering event has occurred. This may be helpful when determining the expiry of the event trigger.

In step S350, if the event trigger has not expired at the next available event notification (e.g. the event notification occasion associated with the event monitoring window where the event trigger has been invoked), the UE notifies the NW about the event trigger in the next available event notification occasion. Step S350 corresponds to steps S140 and S150 shown in Fig. 10.

Subsequently, in above-mentioned step S360, the UE transmits to the base station the CSI event report corresponding to the event trigger.

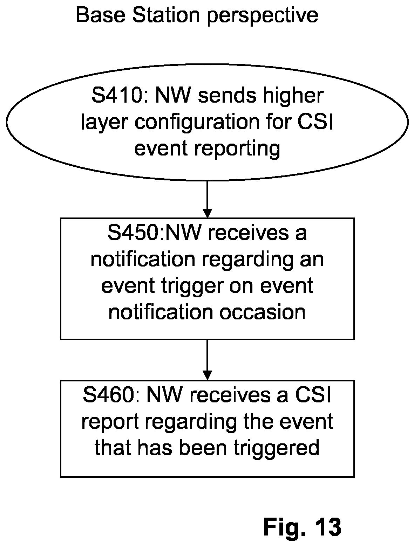

Correspondingly, **Fig. 13** shows a method for a base station, which comprises, in addition to the method steps shown in Fig. 11, step S460 of receiving a channel state report to from the UE.

In step S410 of Fig. 13, which corresponds to step S210, the base station (or NW node) transmits a higher layer configuration for CSI event reporting. In correspondence with step S310, the configuration may include at least one event monitoring RS set as well as event notification occasions and possibly event reporting occasions.

In step S450, which corresponds to step S250, the base station receives a notification regarding an event trigger on an event notification occasion.

Then, in step S460, the base station receives a CSI report regarding the event that has been triggered.

As described with regard to steps S310 and S410, the configuration received by the UE may comprise event reporting occasions for transmitting a CSI event report. For instance, the event reporting occasions may be configured-grant PUSCH occasions in accordance with above-mentioned Mode B of UE-initiated beam management reporting.

However, the configuration need not comprise the event reporting occasions. For instance, in the case of Mode A of UE-initiated beam management reporting, the base station may, upon receiving the event trigger notification, a scheduling grant for a dynamically schedule channel state event report or CSI event report.

As described above, the present invention provides approaches to determining one RS that triggers an event, or more generally, determining that an event has been triggered as well as to determining whether an event trigger has expired. Exemplary embodiments of these features are described in the following.

### Determining one RS to triggers an event

As described above with respect to steps S120 and S320, the UE measures the reference signals in the event-monitoring reference signal set in the time window leading to the CSI event notification occasion, to detect the occurrence of the CSI event, and to trigger CSI reporting to the NW. As described with reference to step S330, there may be more than one candidate RS among an RS set for invoking the event trigger which meets a configured condition (e.g. counter and/or timer based) for channel state reporting within a monitoring time window. Thus, if only one RS per RS set invokes the event trigger within a monitoring time window, the UE may need to determine which event-monitoring reference signal triggers the event that will be notified to the network. In the following, several examples and embodiments will be described as to how the UE determines which event-monitoring reference signal triggers the event.

In some embodiments, the UE determines, as the one RS among an RS set to invoke the event trigger within a monitoring time window, an RS for which the configured condition for channel state reporting is met for a first time within the monitoring time window among all of the plurality of RSs of the RS set.

In such a case, the UE may stop event monitoring for the RS set comprising said one RS after detection of the event for the remainder of the monitoring time window. For instance, when one of the RSs first triggers for the first time an event within the monitoring window among all RSs of the configured event monitoring RS set, the UE may stop further monitoring and detection of the event on the event-monitoring reference signals of the RS set for the rest of the monitoring time window and notify the NW about the firstly detected event trigger in the next CSI event notification occasion.

Such an approach taking the first candidate event trigger may facilitate detection complexity and save computational resources on the side of the UE.

However, if only the first occurring event within a time window is captured by the event notification and event reporting, the channel conditions may change during the remainder of the monitoring time window, and more current candidate events corresponding to more current channel conditions may be disregarded.

Therefore, in some embodiments, the one RS to invoke the event trigger is an RS for which the configured condition for channel state reporting is met for a last time within the monitoring time window among all of the plurality of RSs of the RS set.

In such a case, the UE may monitor the reference signals of the RS set until the end of the monitoring time window to determine the RS signal in the event-monitoring reference signal set that last triggered the CSI event, and use the latter as an event trigger.

Such an approach of taking the last candidate event trigger in the monitoring time window may allow for the UE and the NW to know more accurate channel information at the time of the event notification occasion by detecting the time when the event was last triggered.

As a further option, in some embodiments, the UE may determine the one RS according to a configured order specifying a priority of channel state change events to be reported.

In such a case, the UE may monitor the reference signals until the end of the monitoring window. Then the UE may pick the one RS among the event-monitoring RS set to invoke the event trigger according to a specified priority or priority order as an event trigger. Such a priority order may be defined by a value of a parameter for determining a change in the RS signal quality, such as a signal strength or quality (e.g. RSRP, SINR) of a currently used channel (e.g. serving beam) and/or of candidate channels such as candidate beams corresponding to RS among the RS set, or a difference between a signal strength or quality measured for a candidate beam/channel and the corresponding value of the strength or quality for the current beam channel. For instance, an RS among the RS set for which the greatest value of a parameter for determining the channel strength / quality is measured within the monitoring time window is selected for invoking the one event trigger. As another example, the UE may pick picks a "worst" event (e.g. an event associated with the strongest deterioration of the channel) as the trigger event among all the events invoked.

The parameter according to which the priority order is determined may be configurable by the network and for instance be part of the configuration of the RS set.

Such an approach of using specified priority may facilitate increasing a reporting flexibility and configurability.

As a further possibility, in some embodiments, the UE determines the one RS to invoke the event trigger and accordingly, which event to report according to (or based on) a capability of the communication apparatus.

As a yet further possibility, the UE may be configured to determine the one RS to invoke the RS trigger, wherein the configuration may indicate one option out selected out of the following possibilities or any subset thereof:
- an RS for which a first event in time is detected within the monitoring time window,
- an RS for which a last event in time is detected within the monitoring time window,
- an RS to be determined according to a configured order specifying a priority of events to be reported, or
- an RS to be determined according to a capability of a communication apparatus receiving the configuration.

It is noted that one purpose of determining which RS has invoked the event trigger is to bring about that only one event trigger per RS set and per monitoring time window is invoked. Furthermore, determining which RS has invoked the event trigger may also be useful for determining the expiry time of the trigger. However, as will be described in the following, the the expiry of the event trigger may also be determined without determination of the RS that has invoked the event trigger.

### Determining whether an event trigger has expired

In some embodiments, the UE starts (or sets) a timer at a timing when the event trigger is invoked or has been invoked, and determines that the event trigger has expired when or after the timer has expired or run out.

The starting time of the timer may be a timing at which an event trigger is invoked. The invocation of the event trigger may be determined in accordance with any embodiments described above in section "Determining one RS that triggers an event".

The starting time of the timer may also be the end of the notification time window or the next event notification occasion following the notification time window.

The timer can also be of the form of a counter of CSI event notification occasions (or, in other words, a counter may be used in combination with or instead of the timer) or event reporting occasions (e.g. periodic or semi-persistent event reporting occasions). For instance, the trigger event notification may be sent on N subsequent event notification occasions or event reporting occasions including the next event notification occasion corresponding to the monitoring time window within which the event trigger is invoked, and be decremented by one after each transmission until it reaches a value of zero (e.g. N = 3, and the trigger notification occasion is (re-)sent three times).

The timer/counter value may be configured e.g. by RRC, MAC (e.g. via MAC CE), or L1 DCI or as a fixed value in the specification. Furthermore, the same or different timer and/or counter values may be configured for respectively for mode A and mode B of UE-initiated beam management reporting.

Setting a timer and/or a counter for determining the validity of an event trigger takes into account that after a certain time from invocation of an event trigger, the event information may become obsolete due to channel fluctuations. In view of this, embodiments using a counter or timer may facilitate capturing the channel coherence time and providing for current and valid event information to be reported.

In some embodiments, the UE determines that the event trigger has expired upon successful transmission of the event trigger notification. For instance, the event trigger expires after the UE successfully transmits a notification to the NW regarding the event detection on the next available CSI event notification occasion.

For example, from a UE perspective, transmission of the event trigger notification may be determined to be successful in case the UE was able to transmit the event trigger notification without collision. It is noted that no feedback from the base station is required, as the base station may not acknowledge successful transmission of the report transmitted by the UE.

It is noted that the approach of considering the successful transmission of the event trigger notification may cater to Mode B of beam or CSI report transmission procedure. If this approach is combined with Mode B or, more generally, with a configured channel state report on semi-persistent or periodic report transmission occasions, this may avoid the necessity of feedback from the network for the UE to determine whether the event trigger is to be considered still valid or expired.

However, it is noted that successful transmission of the event trigger notification may also be determined in case of reception a positive acknowledgement or a scheduling grant for a channel state report.

Determining expiry of the event trigger based on successful transmission of the event trigger notification takes into account the possibility that the UE may fail to successfully transmit the event trigger notification, e.g. due to collision with another UCI transmission. Furthermore, using the successful transmission of the event trigger notification to determine expiry of the trigger (rather than waiting e.g. the channel state report transmitted later on) facilitates fast and efficient processing of the trigger event notification.

Determining expiry of the event trigger based on successful transmission of the trigger event notification may also be combined with the above-described embodiments where a timer and/or counter is used.

In some embodiments, the UE determines that the event trigger has expired upon successful transmission of a channel state report reporting on the event corresponding to the event trigger. For instance, the event trigger expires after the UE successfully transmits a channel state or CSI report to the NW regarding the event on a CSI event reporting occasion.

Determining expiry of the event trigger based on successful transmission of the channel state report (rather than the event trigger notification as described above) may be helpful to account for the possibility that the UE may need to retransmit the notification bit multiple times before it acquires an UL grant for report transmission. Therefore, this approach may combined with a dynamically scheduled channel state report, such as in Mode A for UE-initiated CSI reporting.

However, although it has been mentioned that expiry upon successful notification may cater to Mode B and expiry upon successful channel state reporting may cater Mode A, it is noted that neither of these approaches is limited to one of the modes.

Determining expiry of the event trigger based on successful transmission of the channel state report may further be combined with the above-described embodiments where a timer and/or counter is used.

Furthermore, in addition to the above-described embodiments for determining whether the event trigger is still valid, including a timer, a counter and/or a transmission timing of the event notification or report, the event trigger may be determined to have expired when a radio link failure, a beam failure, or a radio link or beam reconfiguration occurs.

As a yet further possibility, the UE may be configured how to determine expiry of the event trigger, wherein the configuration may indicate one option out selected out of the following possibilities or any subset thereof:
(1) when a timer has expired;
(2) upon successful transmission of the event trigger notification;
(3) upon successful transmission of a channel state report reporting on the event corresponding to the event trigger;
(4) combination of (1) and (2);
(5) combination of (1) and (3).

In accordance with the above disclosure of apparatuses and methods, techniques are provided for reporting channel state events using an event trigger. Several approaches and embodiments are described for (1) a feature of determining one RS to trigger an event and (2) a feature of determining whether an event trigger has expired.

With these features, the present disclosure may facilitate reducing event monitoring complexity.

In particular, a UE may be monitoring multiple event types, with each type having multiple event-monitoring reference signal sets. In such a scenario, involving one event trigger and transmitting one notification per event-monitoring reference signal set reduces event monitoring complexity. Processing complexity may further be reduced in embodiments where the UE only needs to detect the first occurrence of an event and stops detection of further events within a monitoring time window.

Furthermore, definition of a trigger expiration time (e.g. via timer, counter, successful transmission of notification/report) may facilitate for the UE to retransmit the notification if the trigger didn't expire. At the same time, the trigger expiration time allows the UE to reduce overhead and increase performance by not reporting CSI that has become obsolete.

It is noted that according to the present disclosure, both features (1) and (2) may be combined as they commonly may contribute to facilitating event monitoring and reporting complexity.

### Alternative embodiments

According to an alternative to the above-disclosed embodiments, each of features (1) and (2) may be provided without the respectively other feature. Thus, according to a first alternative embodiment, the UE determines not more than one event trigger to be invoked per RS set within a monitoring time window, without determining whether the event trigger has expired at the timing of the event notification occasion. On the other hand, according to a second alternative embodiment, the UE determines whether the event trigger has expired at the timing of the event notification occasion, without determining which one of the RS among an event triggering RS set has invoked the trigger (which may result in a plurality of event triggers invoked by a plurality of RSs per set may be reported per RS set if the event trigger notification is transmitted).

Thus, in addition to the above-described communication apparatuses, disclosed is a configuration of at least one reference signal, RS, set, each of the at least one RS set comprising a plurality of RSs for event monitoring, and performs event monitoring by measuring the channel state based on the plurality of RSs of the at least one RS set; and
circuitry, which, in operation, determines, based on the measured channel state, whether an event trigger is invoked by a change detected in the measured channel state, wherein the circuitry, in operation, determines not more than one event trigger to be invoked per RS set within a monitoring time window,
wherein the transceiver, in operation, transmits an event trigger notification on a next available event notification occasion associated with the monitoring time window.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. **The** NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

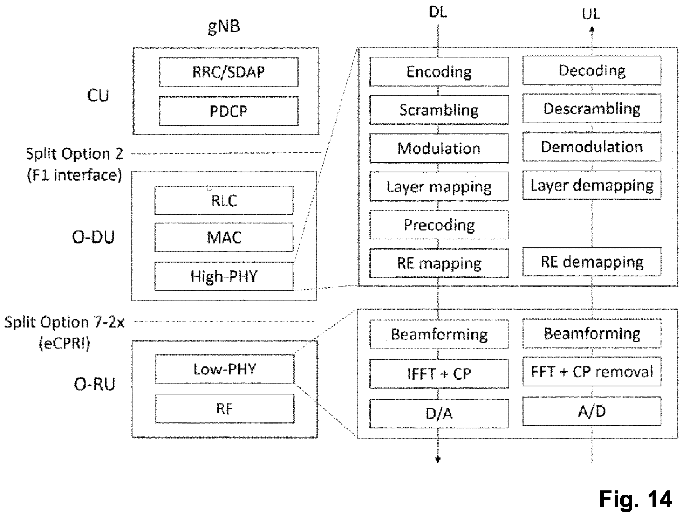

**Fig. 14** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function. The transceiver may not be a radio transceiver and may be, for example, a network transceiver, an optical transceiver, or the like. The radio resource allocated by O-DU may be a resource for radio communication between O-RU and the UE.

### (SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD: Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC (Medium Access Control) Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH (Physical Uplink Shared Channel), PUCCH (Physical Uplink Control Channel), and PRACH (Physical Random Access Channel), downlink channels, such as PDSCH (Physical Downlink Shared Channel), PDCCH (Physical Downlink Control Channel), and PBCH (Physical Broadcast Channel), and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient loT Device or an Ambient IoT Reader.

The Ambient IoT Device may be a wireless communication device having a backscattering function or having a transmission/reception bandwidth of several resource blocks or less. Further, the Ambient loT Reader may be a wireless communication device having a communication function with an Ambient IoT Device. The Ambient IoT Device may also be referred to as an Ambient IoT terminal, an IoT terminal, an LPWA (Low Power Wide Area) terminal, or a Tag.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Aspects

Summarizing, provided are the following aspects.

Aspect 1. A communication apparatus comprising:
a transceiver which, in operation, receives a configuration of at least one reference signal, RS, set, each of the at least one RS set comprising a plurality of RSs for event monitoring, and
performs event monitoring by measuring the channel state based on the plurality of RSs of the at least one RS set; and
circuitry, which, in operation, determines, based on the measured channel state, whether an event trigger is invoked within the monitoring time window by a change detected in the measured channel state,
wherein the transceiver, in operation, transmits an event trigger notification on a next available event notification occasion associated with a monitoring time window if the event trigger has not expired at the timing of the event notification occasion.

Aspect 2. The communication apparatus according to aspect 1, wherein the circuitry, in operation, determines, out of the plurality of RSs per RS set, not more than one RS to invoke the event trigger within the monitoring time window associated with the event notification occasion, the one RS being selected among RS for which the change detected in the measured channel state meets a configured condition for channel state reporting.

Aspect 3. The communication apparatus according to aspect 2, wherein the one RS to invoke the event trigger is an RS for which the configured condition for channel state reporting is met for a first time within the monitoring time window among all of the plurality of RSs of the RS set.

Aspect 4.The communication apparatus according to aspect 3, wherein the circuitry, in operation, stops event monitoring for the RS set comprising said one RS after detection of the event for the remainder of the monitoring time window.

Aspect 5. The communication apparatus according to aspect 2, wherein the one RS to invoke the event trigger is an RS for which the configured condition for channel state reporting is met for a last time within the monitoring time window among all of the plurality of RSs of the RS set.

Aspect 6. The communication apparatus according to aspect 2, wherein the circuitry, in operation, determines the one RS to invoke the event trigger according to a configured order specifying a priority of channel state change events to be reported.

Aspect 7. The communication apparatus according to aspect 2, wherein the circuitry, in operation, determines the one RS according to a capability of the communication apparatus.

Aspect 8. The communication apparatus according to any one of aspects 1 to 7, wherein the circuitry, in operation, starts a timer when the event trigger is or has been invoked, and determines that the event trigger has expired when the timer has expired.

Aspect 9. The communication apparatus according to any one of aspects 1 to 8, wherein the circuitry, in operation, determines that the event trigger has expired upon successful transmission of the event trigger notification.

Aspect 10. The communication apparatus according to any one of aspects 1 to 8, wherein the transceiver, in operation, determines that the event trigger has expired upon successful transmission of a channel state report reporting on the event corresponding to the event trigger.

Aspect 11. The communication apparatus according to any one of aspects 1 to 7, wherein the configuration indicates for the communication apparatus to determine that the event trigger has expired:
- when a timer has expired, and/or
- upon successful transmission of the event trigger notification or of a channel state report reporting on the event corresponding to the event trigger.

Aspect 12. The communication apparatus according to any one of aspects 1 to 11, wherein the transceiver, in operation, transmits a channel state report reporting on the event corresponding to the event trigger.

Aspect 13. The communication apparatus according to aspect 11 or 12, wherein an event reporting occasion for transmitting the channel state report is scheduled dynamically via physical control channel or configured as a configured-grant reporting occasion.

Aspect 14. A base station, comprising:
a circuitry which, in operation, determines a configuration of at least one reference signal, RS, set, each of the at least one RS set comprising a plurality of RSs for event monitoring and an event being a detection event of a channel state to be reported; and
a transceiver which, in operation, transmits the configuration and the plurality of RSs of the at least one RS set, and receives an event trigger notification of an event notification occasion indicating that an event trigger has been in invoked within a monitoring time window associated with the event notification and has not expired at the timing of the event notification occasion.

Aspect 15. The base station according to aspect 14, wherein
the configuration indicates which one RS out of the plurality of RSs per RS set is to invoke the event trigger out of:
   - an RS for which a first event in time is detected within the monitoring time window,
   - an RS for which a last event in time is detected within the monitoring time window,
   - an RS to be determined according to a configured order specifying a priority of events to be reported, or
   - an RS to be determined according to a capability of a communication apparatus receiving the configuration;
and/or the configuration indicates for the receiving communication apparatus to determine that the event trigger has expired:
   - when a timer has expired and/or
   - upon successful transmission of the event trigger notification or of a channel state report reporting on the event corresponding to the event trigger.

Aspect 16. A communication method for a communication apparatus, comprising:
receiving a configuration of at least one reference signal, RS, set, each of the at least one RS set comprising a plurality of RSs for event monitoring;
performing event monitoring by measuring the channel state based on the plurality of RSs of the at least one RS set;
determining, based on the measured channel state, whether an event trigger is invoked within a monitoring time window by detection of a change in the channel state; and transmitting an event trigger notification on a next available event notification occasion associated with the monitoring time window if the event trigger has not expired at the timing of the event notification occasion.

Aspect 17. A communication method for a base station, comprising:
determining a configuration of at least one reference signal, RS, set, each of the at least one RS set comprising a plurality of RSs for event monitoring and an event being a detection event of a channel state to be reported;
transmits the configuration;
transmitting the plurality of RSs of the at least one RS set; and
receiving an event trigger notification of an event notification occasion indicating that an event trigger has been in invoked within a monitoring time window associated with the event notification and has not expired at the timing of the event notification occasion.

Aspect 18. An integrated circuit, which, in operation, causes a communication apparatus to carry out the steps of:
receiving a configuration of at least one reference signal, RS, set, each of the at least one RS set comprising a plurality of RSs for event monitoring;
performing event monitoring by measuring the channel state based on the plurality of RSs of the at least one RS set;
determining, based on the measured channel state, whether an event trigger is invoked within a monitoring time window by detection of a change in the channel state; and transmitting an event trigger notification on a next available event notification occasion associated with the monitoring time window if the event trigger has not expired at the timing of the event notification occasion.

Aspect 19. An integrated circuit, which, in operation, causes a base station to carry out the steps of:
determining a configuration of at least one reference signal, RS, set, each of the at least one RS set comprising a plurality of RSs for event monitoring and an event being a detection event of a channel state to be reported;
transmits the configuration;
transmitting the plurality of RSs of the at least one RS set; and
receiving an event trigger notification of an event notification occasion indicating that an event trigger has been in invoked within a monitoring time window associated with the event notification and has not expired at the timing of the event notification occasion.

## Claims

1. A communication apparatus comprising:
a transceiver which, in operation, receives a configuration of at least one reference signal, RS, set, each of the at least one RS set comprising a plurality of RSs for event monitoring, and performs event monitoring by measuring the channel state based on the plurality of RSs of the at least one RS set; and
circuitry, which, in operation, determines, based on the measured channel state, whether an event trigger is invoked within a monitoring time window by a change detected in the measured channel state,
wherein the transceiver, in operation, transmits an event trigger notification on a next available event notification occasion associated with the monitoring time window if the event trigger has not expired at the timing of the event notification occasion.

2. The communication apparatus according to claim 1, wherein the circuitry, in operation, determines, out of the plurality of RSs per RS set, not more than one RS to invoke the event trigger within a monitoring time window associated with the event notification occasion, the one RS being selected among RS for which the change detected in the measured channel state meets a configured condition for channel state reporting.

3. The communication apparatus according to claim 2, wherein the one RS to invoke the event trigger is an RS for which the configured condition for channel state reporting is met for a first time within the monitoring time window among all of the plurality of RSs of the RS set.

4. The communication apparatus according to claim 3, wherein the circuitry, in operation, stops event monitoring for the RS set comprising said one RS after detection of the event for the remainder of the monitoring time window.

5. The communication apparatus according to claim 2, wherein the one RS to invoke the event trigger is an RS for which the configured condition for channel state reporting is met for a last time within the monitoring time window among all of the plurality of RSs of the RS set.

6. The communication apparatus according to claim 2, wherein the circuitry, in operation, determines the one RS according to a configured order specifying a priority of channel state change events to be reported.

7. The communication apparatus according to any one of claims 1 to 6, wherein the circuitry, in operation, starts a timer when the event trigger is or has been invoked, and determines that the event trigger has expired when the timer has expired.

8. The communication apparatus according to any one of claims 1 to 7, wherein the circuitry, in operation, determines that the event trigger has expired upon successful transmission of the event trigger notification.

9. The communication apparatus according to any one of claims 1 to 7, wherein the transceiver, in operation, determines that the event trigger has expired upon successful transmission of a channel state report reporting on the event corresponding to the event trigger.

10. The communication apparatus according to any one of claims 1 to 6, wherein the configuration indicates for the communication apparatus to determine that the event trigger has expired:
• when a timer has expired, and/or
• upon successful transmission of the event trigger notification or of a channel state report reporting on the event corresponding to the event trigger.

11. The communication apparatus according to any one of claims 1 to 8, wherein the transceiver, in operation, transmits a channel state report reporting on the event corresponding to the event trigger.

12. The communication apparatus according to claim 10 or 11, wherein an event reporting occasion for transmitting the channel state report is scheduled dynamically via physical control channel or configured as a configured-grant reporting occasion.

13. A base station, comprising:
a circuitry which, in operation, determines a configuration of at least one reference signal, RS, set, each of the at least one RS set comprising a plurality of RSs for event monitoring and an event being a detection event of a channel state to be reported; and
a transceiver which, in operation, transmits the configuration and the plurality of RSs of the at least one RS set, and receives an event trigger notification of an event notification occasion indicating that an event trigger has been in invoked within a monitoring time window associated with the event notification and has not expired at the timing of the event notification occasion.

14. The base station according to claim 13, wherein
the configuration indicates which one RS out of the plurality of RSs per RS set is to invoke the event trigger out of:
• an RS for which a first event in time is detected within the monitoring time window,
• an RS for which a last event in time is detected within the monitoring time window,
• an RS to be determined according to a configured order specifying a priority of events to be reported, or
• an RS to be determined according to a capability of a communication apparatus receiving the configuration;
and/or the configuration indicates for the receiving communication apparatus to determine that the event trigger has expired:
• when a timer has expired and/or
• upon successful transmission of the event trigger notification or of a channel state report reporting on the event corresponding to the event trigger.

15. A communication method for a communication apparatus, comprising:
receiving a configuration of at least one reference signal, RS, set, each of the at least one RS set comprising a plurality of RSs for event monitoring;
performing event monitoring by measuring the channel state based on the plurality of RSs of the at least one RS set;
determining, based on the measured channel state, whether an event trigger is invoked within a monitoring time window by detection of a change in the channel state; and
transmitting an event trigger notification on a next available event notification occasion associated with the monitoring time window if the event trigger has not expired at the timing of the event notification occasion.
